# EUROPEAN PATENT APPLICATION

(11) **EP 2 293 123 A1**
(43) Date of publication of application: **09.03.2011**
(21) Application number: 10170688.5
(22) Date of filing: 23.07.2010
(51) Int. Cl.: G02B 6/00

(54) **LCD including LED**

(30) Priority: 24.07.2009 KR 20090067781; 24.07.2009 KR 20090067783
(71) Applicant: LG Innotek Co., Ltd., Seoul 100-714 (KR)
(72) Inventor: Park, Jun Seok, Seoul 100-714 (KR)
(74) Representative: Zardi, Marco

(57) **Abstract**

Disclosed is a liquid crystal display including a light emitting device (110). The liquid crystal display includes a reflector sheet (120) having a plurality of patterns (130); a light emitting device (110) at a lateral side of the reflector sheet (130); and a panel unit (200) over the reflector sheet (130).

## Description

### Field of application

The present application relates to a liquid crystal display (LCD) including a light emitting device (LED).

### Prior art

A light emitting device (LED) is a semiconductor device to convert a current into light. Since a red LED has been commercialized, the red LED, together with a green LED, is used as a light source of electronic devices including information communication equipment.

For example, a nitride semiconductor has high thermal stability and wide bandgap and can be combined with other elements such as In and Al to form a semiconductor layer that emits green, blue and white lights. In addition, the nitride semiconductor can easily adjust wavelengths of emitted lights, so the nitride semiconductor has been spotlighted in the field of high-power electronic devices such as LEDs.

According to the related art, an LED LCD includes a direct-illumination type backlight unit (BLU), so there is limitation to provide an LED set having the slim structure. In addition, in the case of the edge-illumination type LED, an intermediate optical system including a light guide plate, a diffusion plate, and the like must be provided, so that there is limitation to manufacture the LCD having the slim structure.

Further, the LCD according to the related art is an inefficient optical signal modulator that transmits about 3% to about 10% of incident light.

That is, according to the related art, the intermediate optical system having low light transmittance must be adopted to provide uniform light. Thus, about 50% of the light may transmit through the intermediate optical system. In addition, light loss may occur in a polarizer plate of an LCD panel and a color filter.

For instance, according to the related art, the BLU includes a lamp, a reflector sheet, a light guide plate and a diffuser plate, and about 38% of light loss occurs in the light guide plate.

### Summary of the invention

The embodiment provides an LCD having the slim structure with superior light transmittance.

According to the embodiment, there is provided a liquid crystal display comprising a reflector sheet including a plurality of patterns; a light emitting device at a lateral side of the reflector sheet; and a panel unit over the reflector sheet.

According to the embodiment, there is provided a liquid crystal display comprising a backlight unit including a reflector sheet having a plurality of patterns and a light emitting device at a lateral side of the reflector sheet; and a panel unit over the backlight unit.

According to the embodiment, there is provided a liquid crystal display comprising a panel unit including a bottom substrate, a transparent electrode, a liquid crystal, a color filter, a top substrate and a polarizer plate; and a light emitting device that directly irradiates light onto the panel unit.

### Brief description of the drawings

FIG. 1 is a sectional view showing an LCD including an LED according to the embodiment;
FIG. 2 is a sectional view showing a reflector sheet of an LCD including an LED according to the embodiment; and
FIG. 3 is a plan view showing a reflector sheet of an LCD including an LED according to the embodiment.

### Detailed Description

Hereinafter, the LCD including the LED according to the embodiment will be described in detail with reference to accompanying drawings.

In the description of embodiments, it will be understood that when a layer (or film) is referred to as being 'on' another layer or substrate, it can be directly on another layer or substrate, or intervening layers may also be present. Further, it will be understood that when a layer is referred to as being 'under' another layer, it can be directly under another layer, and one or more intervening layers may also be present. In addition, it will also be understood that when a layer is referred to as being 'between' two layers, it can be the only layer between the two layers, or one or more intervening layers may also be present.

### (Embodiment)

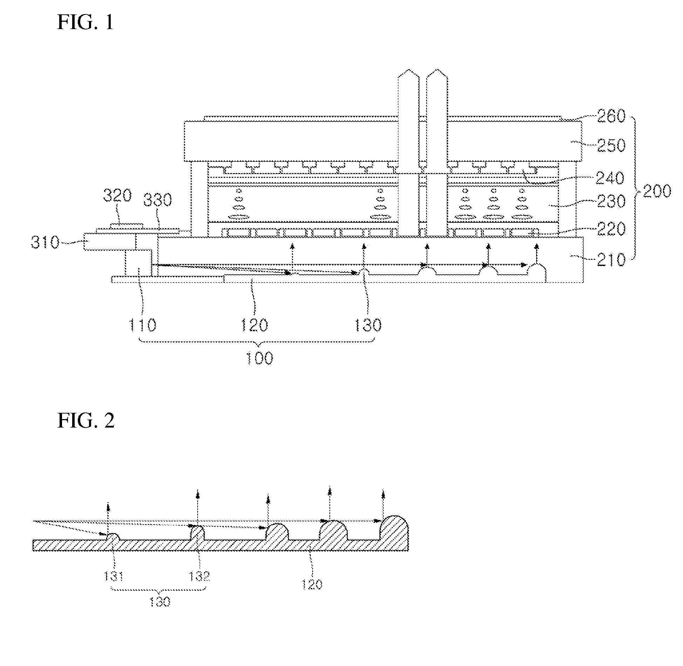

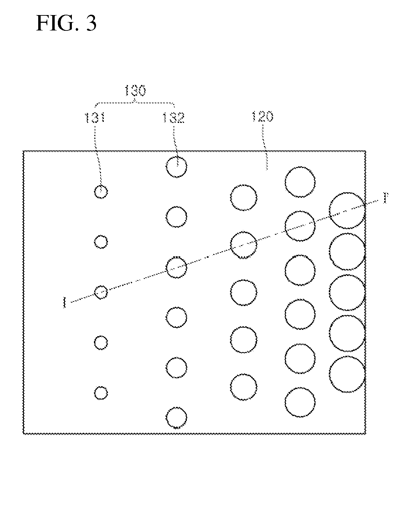

FIG. 1 is a sectional view showing the LCD including the LED according to the embodiment, FIG. 2 is a sectional view showing a reflector sheet of the LCD including the LED according to the embodiment, and FIG. 3 is a plan view showing the reflector sheet of the LCD including the LED according to the embodiment.

The LCD according to the embodiment may include a panel unit 200 having a bottom substrate 210, a transparent electrode 220, a liquid crystal 230, a color filter 240, a top substrate 250 and a polarizer plate 260, and an LED 110 that directly irradiates light to the panel unit 200.

In addition, the LCD according to the embodiment may include a reflector sheet 120 having a plurality of patterns 130, an LCD 110 formed at a lateral side of the reflector sheet 120, and a panel unit 200 formed on the reflector sheet 120.

Further, the LCD according to the embodiment may include a backlight unit 100 having a reflector sheet 120 formed with a plurality of patterns 130 and an LCD 110 formed at a lateral side of the reflector sheet 120, and a panel unit 200 formed on the backlight unit 100.

The panel unit 200 displays an image to the outside and the backlight unit 100 supplies the light to the panel unit 200 to display the image.

According to the embodiment, the light emitted from the LED 110 may directly irradiate onto the panel unit 200 without transmitting through other elements.

For instance, the light emitted from the LED 110 may directly irradiate onto the bottom substrate 210 of the panel unit 200 without transmitting through other elements.

According to the embodiment, the bottom substrate 210 may include a predetermined pattern to reflect the light emitted from the LED 110 to the panel unit 220.

According to the embodiment, the reflector sheet 120 may include a plurality of patterns 130.

The patterns 130 of the reflector sheet 120 may include protrusions that uniformly reflect the light emitted from the LED 110 toward the panel unit 200, but the embodiment is not limited thereto.

The patterns 130 of the reflector sheet 120 may have reflective regions which are gradually enlarged as they are remote from the LED 110, or the patterns 130 of the reflector sheet 120 may have sizes which are gradually increased as they are remote from the LED 110.

According to the embodiment, the patterns 130 of the reflector sheet 120 may correspond to patterns of the bottom substrate 210.

For instance, the patterns 130 of the reflector sheet 120 may have convex shapes and the patterns of the bottom substrate 210 may have concave shapes such that they are coupled with each other, but the embodiment is not limited thereto.

According to the LCD of the embodiment, in order to provide the LED LCD having the slim structure with superior light transmittance, the light of the LED may be directly irradiated onto the panel unit of the LCD.

According to the embodiment, in order to provide the edge-illumination type LED having the slim structure while reducing the manufacturing cost and light loss of the optical system, functional reflective patterns can be formed on the reflector sheet. In this case, the planar light can be uniformly provided due to the functional reflective patterns, so that the LCD may have the slim structure.

According to the embodiment, a diffuser plate or other light guide optics structures may not exist between the reflector sheet and the panel unit, so the light loss may be reduced by about 50% or more. The diffuser plate or a prism sheet may increase the amount of light, but they are expensive and enlarge the thickness of the LCD.

In order to provide the LCD having the slim structure, the light laterally emitted from the LED is uniformly distributed by using the reflector sheet and reflected toward the panel unit to reduce the light loss.

According to the embodiment, in order to provide the LED LCD having the slim structure with superior light transmittance, the intermediate optical system is omitted and the reflective patterns are formed on the reflector sheet.

Hereinafter, the panel unit 200 and the backlight unit 100 of the LCD according to the embodiment will be described in detail.

The panel unit 200 displays the image to the outside and the backlight unit 100 supplies the light to the panel unit 200 to display the image.

According to the embodiment, the panel unit 200 may include a bottom substrate 210, a transparent electrode pixel 220 having a TFT, a liquid crystal 230, a color filter 240, a top substrate 250, and a polarizer plate 260. In addition, according to the embodiment, a PCB 310, a TCP (tape carrier package) substrate 330, and a plurality of ICs 320 mounted on the TCP substrate 330 can be further provided.

In addition, according to the embodiment, a supporter pin (not shown) can be further provided to support the panel unit 200.

The bottom substrate 210 and the top substrate 250 may include a glass substrate, but the embodiment is not limited thereto. The glass substrate may include an alkali-free glass substrate fabricated through a fusion process, but the embodiment is not limited thereto.

According to the embodiment, the light emitted from the LED 110 may irradiate onto the panel unit 200 without transmitting through other elements. For instance, the light emitted from the LED 110 may directly irradiate onto the bottom substrate 210 of the panel unit 200 without transmitting through other elements.

To this end, the bottom substrate 210 may include a predetermined pattern to directly reflect the light of the LED 110 toward the panel unit 200.

The pattern of the bottom substrate 210 may have a concave shape, but the embodiment is not limited thereto.

According to the embodiment, in order to provide the LED LCD having the slim structure with superior light transmittance, the light of the LED is directly irradiated onto the panel unit of the LCD.

Hereinafter, the backlight unit 100 will be described.

According to the embodiment, in order to provide the LED LCD having the slim structure with superior light transmittance, the intermediate optical system is omitted and the reflective pattern is formed on the reflector sheet.

According to the embodiment, the reflector sheet 120 may include a plurality of patterns 130.

For instance, the patterns 130 of the reflector sheet 120 may include protrusions that uniformly reflect the light emitted from the LED 110 toward the panel unit 200, but the embodiment is not limited thereto.

According to the embodiment, the light emitted from the LED 110 is reflected by the patterns 130 of the reflector sheet 120, so that the light can be uniformly irradiated onto the panel unit 200.

In addition, according to the embodiment, the light of the LED 110 can be uniformly irradiated onto the panel unit 200 through the interaction between the patterns 130 of the reflector sheet 120 and the pattern of the bottom substrate 210.

According to the embodiment, the patterns 130 of the reflector sheet 120 may correspond to the pattern of the bottom substrate 210. For instance, the patterns 130 of the reflector sheet 120 may have convex shapes and the patterns of the bottom substrate 210 may have concave shapes such that they are coupled with each other, but the embodiment is not limited thereto.

According to the embodiment, the patterns 130 of the reflector sheet 120 may have hemispherical sectional shapes, but the embodiment is not limited thereto. For instance, the patterns 130 of the reflector sheet 120 may have polygonal cone shapes or truncated polygonal cone shapes.

In addition, although the patterns 130 of the reflector sheet 120 are illustrated as protrusions, the embodiment is not limited thereto. For instance, the patterns 130 may be provided in the form of embossing or recesses.

The patterns 130 of the reflector sheet 120 may include expandable resin and can be prepared as a multi-layer structure.

According to the embodiment, the patterns 130 of the reflector sheet 120 may have high reflectivity. For instance, the patterns 130 of the reflector sheet 120 may have reflectivity of about 98% or above. In addition, the patterns 130 of the reflector sheet 120 are formed through the extrusion process, so that the manufacturing process can be simplified and the manufacturing cost can be reduced.

The patterns 130 of the reflector sheet 120 may have reflective regions which are gradually enlarged as they are remote from the LED 110. In this case, the light reflected from a region remote from the LED 110 may have intensity identical to that of the light reflected from a region closed to the LED 110, so that planar light can be uniformly supplied to the panel unit.

For instance, as shown in FIGS. 2 and 3, the patterns 130 of the reflector sheet 120 may have sizes which are gradually increased as they are remote from the LED 110.

In addition, for example, the patterns 130 of the reflector sheet 120 may include a first pattern group 131 formed adjacent to the LED 110 and a second pattern group 132 formed remote from the LED 110, in which the first pattern group 131 is disposed in parallel to the second pattern group 132, so that the light can be uniformly reflected.

In addition, for example, the patterns 130 of the reflector sheet 120 may include a first pattern group 131 formed adjacent to the LED 110 and a second pattern group 132 formed remote from the LED 110, in which the first pattern group 131 horizontally crosses the second pattern group 132 so that the light can be uniformly and efficiently reflected.

Further, according to the embodiment, the patterns 130 of the reflector sheet 120 may be sequentially increased or decreased to uniformly reflect the light.

In addition, according to the embodiment, the patterns 130 of the reflector sheet 120 may be prepared in the form of a stripe to uniformly reflect the light.

According to the embodiment, in order to provide the edge-illumination type LED having the slim structure while reducing the manufacturing cost and light loss of the optical system, functional reflective patterns can be formed on the reflector sheet. In this case, the planar light can be uniformly provided due to the functional reflective patterns, so that the LCD may have the slim structure.

According to the embodiment, a diffuser plate or other light guide optics structures may not exist between the reflector sheet and the panel unit, so the light loss may be reduced by about 50% or more.

Meanwhile, the diffuser plate or a prism sheet may increase the amount of light, but they are expensive and enlarge the thickness of the LCD. In this regard, according to the embodiment, in order to provide the LCD having the slim structure, the light laterally emitted from the LED is uniformly distributed by using the reflector sheet and reflected toward the panel unit to reduce the light loss.

According to the LCD of the embodiment, reflective patterns are formed on the bottom substrate of the panel unit or the reflector sheet, so that the light of the LED can be directly irradiated on the panel unit of the LCD, thereby providing the LED LCD having the slim structure with superior light transmittance.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

**1.** A liquid crystal display comprising:
a reflector sheet including a plurality of patterns;
a light emitting device at a lateral side of the reflector sheet; and
a panel unit over the reflector sheet.

**2.** The liquid crystal display of claim 1, wherein the patterns include protrusions that uniformly reflect light emitted from the light emitting device to the panel unit.

**3.** The liquid crystal display of claim 1, wherein the patterns have reflective regions, which are gradually enlarged as the patterns are remote from the light emitting device.

**4.** The liquid crystal display of claim 1, wherein the patterns have sizes, which are gradually increased as the patterns are remote from the light emitting device.

**5.** The liquid crystal display of claim 1, wherein the patterns include a first pattern group adjacent to the light emitting device and a second pattern group remote from the light emitting device, in which the first pattern group is disposed in parallel to the second pattern group.

**6.** The liquid crystal display of claim 1, wherein the patterns include a first pattern group adjacent to the light emitting device and a second pattern group remote from the light emitting device, in which the first pattern group horizontally crosses the second pattern group.

**8.** The liquid crystal display of claim 1, wherein the panel unit includes a patterned glass plate that uniformly transmits light reflected from the reflector sheet.

**9.** The liquid crystal display of claim 1, wherein the panel unit comprises a bottom substrate, a transparent electrode, a liquid crystal, a color filter, a top substrate and a polarizer platet.

**10.** The liquid crystal display of claim 9, wherein the light emitted from the light emitting device is irradiated onto the bottom substrate of the panel unit.

**11.** The liquid crystal display of claim 9, wherein the bottom substrate includes a predetermined pattern.

**12.** The liquid crystal display of claim 11, wherein the light emitted from the light emitting device is reflected to the panel unit by the pattern of the bottom substrate.
